Europäisches Patentamt

(19) European Patent Office

Office européen des brevets

(11) **EP 0 872 785 A1**

(12) **EUROPEAN PATENT APPLICATION**

(43) Date of publication:
21.10.1998 Bulletin 1998/43

(51) Int. Cl.$^6$: **G05B 13/04**, G05D 1/08

(21) Application number: 98106617.8

(22) Date of filing: 09.04.1998

(84) Designated Contracting States:
AT BE CH CY DE DK ES FI FR GB GR IE IT LI LU
MC NL PT SE
Designated Extension States:
AL LT LV MK RO SI

(30) Priority: 15.04.1997 IT TO970316

(71) Applicant:
Societa' Elettronica per L'Automazione S.p.A.
10154 Torino (IT)

(72) Inventor: **Crupi, Santino**
10146 Torino (IT)

(74) Representative:
**Franzolin, Luigi et al
STUDIO TORTA S.r.l.,
Via Viotti, 9
10121 Torino (IT)**

(54) **An autopilot device and method for cancelling dynamic operating errors in a system having variable parameters**

(57)    An autopilot device comprising a regulator (44) receiving at its input a plurality of reference signals (R) and generating at its output control signals (u(t)) for a physical system (40) the dynamic behaviour of which can be described by a plurality of state variables (X(t)) and a measurement block (42) operable to select, from among the state variables (X(t)), a subset of measured output variables (Y(t)). An estimator (46) modelling the physical system (40) receives at its input the control signals (u(t)) and generates a plurality of estimated output variables ($\hat{Y}(t)$) which are compared with the measured output variables (Y(t)) to generate an error signal (e(t)) utilised by the estimator. In the estimator (46) there is provided an extended dynamic system (Z(t)) which has as its state variables a plurality of estimated state variables ($\hat{X}(t)$) of the physical system (40) together with a plurality of additional state variables which model respective imaginary commands ($\hat{\eta}(t)$) of unknown value which have the same effect on the physical system (40) as the control signals (u(t)) and which introduce operating errors into the dynamic behaviour of the physical system (40) itself.

Fig.2

## Description

The present invention relates to an autopilot device and to a method for cancelling operating errors in the dynamic behaviour of a system having variable or constant parameters.

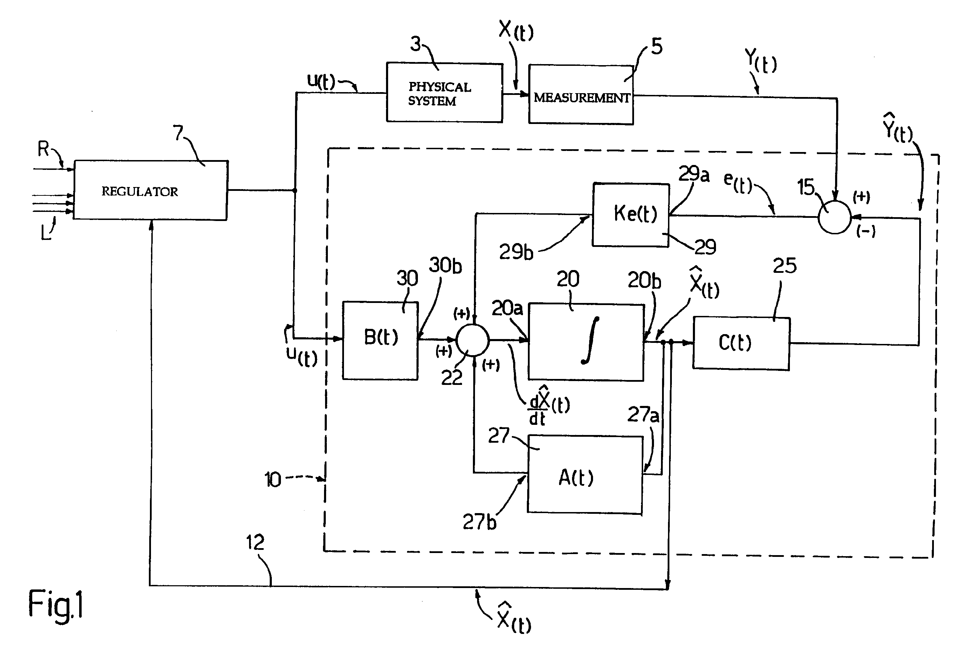

With particular reference to Figure 1, a known type of autopilot device is generally indicated 1.

The device 1 is operable to control a physical system 3 which is schematically represented by a block receiving a control vector u(t) at its input and generating at its output a plurality of state variables X(t) (defined by a vector). In particular, the state variables X(t) are fed to a measurement block 5 which selects from among the various state variables X(t) of the physical system 3, some state variables Y(t) (defined by a vector), or a combination of the state variables which represent the measured state variables (output variables). For example, the physical system 3 may comprise a vehicle (not shown) in particular a vehicle which moves in a fluid (for example a submarine) which is provided with a plurality of sensors (not shown) which can measure the instantaneous value of the output variables Y(t).

The device 1 comprises a regulator 7 which receives at its input a plurality of reference signals R (reference set) together with a plurality of limits L and generates a said control vector u(t) at its output.

The reference signals R are set manually by an operator (not shown) of the autopilot device 1 and represent the desired values of the output variables of the physical system 3 controlled by the autopilot device 1. The device 1 further includes an estimator 10 which receives at its input the control vector u(t) and the vector Y(t) of the measured variables and generates a feedback vector, the nature of which will be clarified hereinafter, fed back by means of a line 12 to the regulator 7. The estimator 10 is able to model the dynamic behaviour of the physical system 3 by generating at its output a vector $\hat{X}(t)$ comprising the estimated values of the state variables of the system. The estimator 10 is, moreover, able to generate at its output a vector $\hat{Y}(t)$ comprising the estimated values of the measured output variables of the system.

The regulator 7 determines the control vector u(t) as a function of the reference signals R and the limits set by the operator and in dependence on the estimated state variables $\hat{X}(t)$.

The output of the measurement block 5 is fed (with positive sign) to a summing block 15 which also receives the vector $\hat{Y}(t)$ (estimated output variables) sign inverted; the summing block 15 therefore generates at its output an error vector e(t) which represents the difference between the vector Y(t) of the measured output variables and the vector $\hat{Y}(t)$ of the estimated output variables.

The estimator 10 includes an integrator block 20 which has an input 20a communicating with the output of a summing node 22 and an output 20b communicating with a measurement block 25 generating at its output the vector $\hat{Y}(t)$ of the estimated output variables. The estimator 10 further comprises:

a first processor block 27 (described in detail hereinafter) having an input 27a connected to the output 20b of the integrator block 20 and an output 27b communicating with a summing input of the node 22;
a second processor block 29 (described in detail hereinafter) having an input 29a connected to the output of the node 15 and an output 29b communicating with a summing input of the node 22; and
a third processor block 30 (described in detail hereinafter) receiving at its input the control vector u(t) and having an output 30b communicating with a summing input of the node 22.

The physical system of the estimator 10 can be represented by a system (1) of linear differential equations having variable parameters, of the type:

$$\frac{d(\hat{X}(t))}{dt} = A(t) \cdot \hat{X}(t) + B(t) \cdot u(t) + Ke \cdot (Y(t) - \hat{Y}(t))$$

$$\hat{Y}(t) = C(t) \cdot \hat{X}(t)$$

where:

A(t), the said free evolution matrix, represents the transfer function of the block 27;
B(t), the said input matrix, represents the transfer function of the block 30;
C(t) represents the transfer function of the measurement block 25 and allows selection, of the output variables $\hat{Y}(t)$ from among the estimated state variables $\hat{X}(t)$ of the system,; and
Ke(t) is the transfer function of the block 29 and represents a gain.

The dependency of the matrices A(t) and B(t) on time indicates how the behaviour of the system is not constant in time and depends on the working conditions (system having variable parameters).

The autopilot device 1, thanks to the feedback (signal $\hat{X}(t)$) brings the output variables Y(t) close to the references R set by the operator. This type of differential proportional feedback does not ensure the absence of operating errors, that is differences between references and outputs, caused by perturbations.

Environmental disturbances which are not measurable and/or not identifiable which act on the physical system 3 are of various types, moreover the modelling of the physical system, as performed by the estimator 10, is obviously not perfect; because of these factors errors are generated (operating errors) in the state variables of the system 3, that is to say the real value of the state variables of the system 3 differs from the required value.

The object of the present invention is to provide an autopilot device which can cancel dynamic operating errors in a dynamic system having constant or variable parameters.

The preceding object is achieved by the present invention in that it relates to an autopilot device of the type comprising: regulator means receiving a plurality of reference signals at its input and generating at its output control signals for a physical system the dynamic behaviour of which can be described by a plurality of state variables; measurement means cooperating with the said physical system and operable to select, from among the said state variables, a subset of measured state variables; estimator means operable to model the said physical system receiving the said control signals at its input and generating at its output a plurality of estimated output variables; comparator means receiving the said measured output variables at its input together with the said estimated output variables and generating at its output an error signal fed to the estimator means themselves; the said estimator means moreover supplying a feedback signal to the said regulator means which is utilised, together with the said reference signals, to calculate the said control signals, characterised in that there is provided in the said estimator means an extended dynamic system which has as its state variables a plurality of estimated state variables of the physical system together with a plurality of additional state variables which model respective imaginary commands of unknown value which have the same effect on the physical system as the said control signals and which introduce operating errors into the dynamic behaviour of the physical system itself.

The present invention also relates to a method for cancelling operating errors in the dynamic behaviour of a system having variable parameters comprising the steps of: supplying a plurality of input reference signals to regulator means for generating output control signals; supplying the said control signals to a physical system the dynamic behaviour of which can be described by a plurality of state variables; selecting from among the said state variables a subset of measured output variables; modelling the said physical system by means of a model receiving the said control signals at its input and generating at its output a plurality of estimated output variables; comparing the said measured output variables with the said estimated output variables to generate an error signal supplied to the said model; and supplying a feedback signal to the said regulator means together with the said reference signals for the calculation of the said control signals, characterised in that it includes the step of providing in the said model an extended dynamic system which has as its state variables a plurality of estimated state variables of the physical system together with a plurality of additional state variables which model respective imaginary commands of unknown value which have the same effect on the physical system as the said control signals and which introduce the said operating errors in the dynamic behaviour of the physical system itself.

The invention will now be illustrated with reference to the attached drawings which represent a preferred but non-limitative embodiment thereof, in which:

Figure 1 schematically illustrates an autopilot device of known type; and
Figure 2 schematically illustrates an autopilot device formed according to the principles of the present invention.

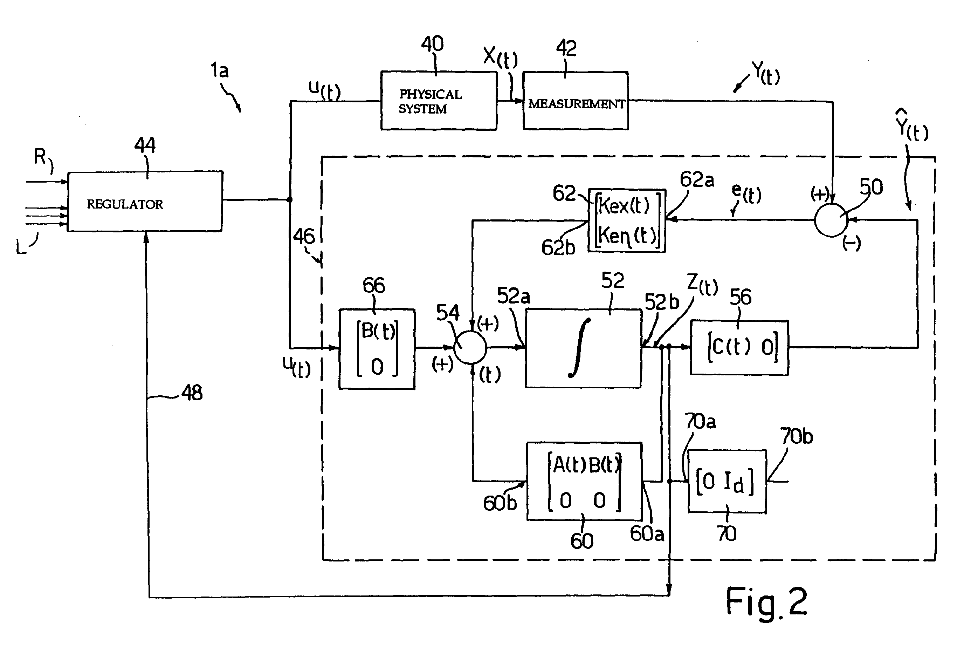

In Figure 2 there is shown an autopilot device 1a formed according to the principles of the present invention. The device 1a acts to control a physical system 40 (shown schematically) receiving at its input a control vector u(t) and generating at its output a plurality of state variables X(t) which describe the dynamic behaviour of the system. In particular, the state variables X(t) are supplied to a measurement block 42 which selects, from among the various state variables X(t) of the physical system 40 a subset of state variables Y(t) which represent the measured output variables. For example, the physical system 40 may comprise a vehicle (not shown) in particular a vehicle which moves in a fluid (for example a submarine) which is provided with a plurality of sensors (not shown) acting to measure the instantaneous value of the output variables Y(t). The output variables Y(t) are defined in general by an N-dimensional vector Y(t) comprising, for example, the following variables:

- $Y_1$ depth;
- $Y_2$ heading;
- $Y_3$ pitch angle;
- $Y_4$ roll angle;

- $Y_5$ velocity; and
- $Y_n$ (...);

The device 1a comprises a regulator 44 receiving a plurality of reference signals R (reference set) at its input together with a plurality of limits L and generating at its output the control vector u(t).

The reference signals R are set manually by an operator (not shown) of the autopilot device 1a and represent the desired values of the state variables of the physical system 40 controlled by the autopilot device 1a. The device 1a further comprises an estimator 46 which operates to model the physical system 40, receive the control vector u(t) at its input and generates at its output a vector the nature of which will be clarified hereinbelow, supplied as a feedback signal by means of a line 48 to the regulator 44.

The estimator 46 acts to model the dynamic behaviour of the physical system 40 by generating an output vector $\hat{Z}(t)$ the nature of which will be clarified hereinafter.

The estimator 46 further acts to generate a vector $\hat{Y}(t)$ comprising the estimated values of the measured output variables of the system.

The regulator 44 determines the control vector u(t) as a function of the reference signals R, the limits set by the operator and as a function of the vector $\hat{Z}(t)$.

The output from the measurement block 42 is fed (with positive sign) to a summing block 50 which also receives the vector $\hat{Y}(t)$ (estimated output variables) inverted in sign; the summing block 50 therefore generates at its output an error vector e(t) which represents the difference between the vector Y(t) of the measured output variables and the vector $\hat{Y}(t)$ of the estimated output variables.

The estimator 46 comprises an integrator block 52 which has an input 52a communicating with a summing node 54 and an output 52b communicating with the input of a measurement block 56 generating at its output the vector $\hat{Y}(t)$ of the estimated output variables.

The estimator 46 further comprises:

a first processor block 60 (described in detail hereinafter) having an input 60a connected to the output 52b of the integrator block 52 and an output 60b communicating with a summing input of the node 54;
a second processor block 62 (described in detail hereinafter) having an input 62a connected to the output of the node 50 and an output 62b communicating with a summing input of the node 54; and
a third processor block 66 (described in detail hereinafter) receiving the control vector u(t) at its input and having an output communicating with a summing input of the node 54.

According to the present invention, for the purpose of cancelling dynamic operating errors of the system it is supposed that the operating errors of the state variables are generated by an imaginary additional command η(t), of unknown value, which has the same effect on the system as the control vector u(t) and which introduces these operating errors into the dynamic behaviour of the system.

By estimating the said imaginary commands and inserting them into the law of control (as specified hereinafter) the operating errors are cancelled.

For the purpose of calculating such additional imaginary commands there is defined an extended dynamic system Z(t) which has as its state variables all the state variables X(t) of the physical system 40 together with the additional state variables which model respective imaginary commands η(t), that is to say:

$$Z(t) = \begin{bmatrix} X(t) \\ \eta(t) \end{bmatrix}$$

The overall state variables Z(t) of the disturbances η(t) are then estimated by an estimator described by the following set (2) of differential equations:

$$\frac{d\hat{Z}(t)}{dt} = \begin{bmatrix} A(t) & B(t) \\ 0 & 0 \end{bmatrix} \cdot \hat{Z}(t) + \begin{bmatrix} B(t) \\ 0 \end{bmatrix} \cdot u(t) + Kem(t) \cdot (Y(t) - \hat{Y}(t))$$

$$\hat{Y}(t) = \begin{bmatrix} C(t) & 0 \end{bmatrix} \hat{Z}(t)$$

where:

$$\hat{Z}(t) = \begin{bmatrix} \hat{X}(t) \\ \hat{\eta}(t) \end{bmatrix}$$

$\hat{X}(t)$ represent the estimated state variables and
$\hat{\eta}(t)$ represent the estimated imaginary commands.

That is to say, by developing the system the following relationship (3) is obtained:

$$\frac{d}{dt}\begin{bmatrix} \hat{X}(t) \\ \hat{\eta}(t) \end{bmatrix} = \begin{bmatrix} A(t) \cdot \hat{X}(t) + B(t) \cdot \hat{\eta}(t) + B(t) \cdot u(t) + Kex \cdot (Y(t) - \hat{Y}(t)) \\ Ke\eta(t)(Y(t) - \hat{Y}(t)) \end{bmatrix}$$

$$\hat{Y}(t) = C(t) \cdot \hat{X}(t)$$

From an analysis of the above system (3) of equations it is noted how the effect (that is to say the term $B(t)\eta(t)$) of the disturbances $\eta(t)$ of the system is identical to that (that is to say the term $B(t)u(t)$ of the commands $u(t)$, that is to say the disturbances are comparable to command variables.

To obtain the set of equations (2) of the said above type one has that:

- the transfer function of the block 60 is of the type:

$$\begin{bmatrix} A(t) & B(t) \\ 0 & 0 \end{bmatrix}$$

where A(t) is the free evolution matrix of the system and B(t) represents the input matrix of the system. The mathematical and physical significance of the free evolution matrix and the input matrix of the system is known and can be found, for example, in the text "Theory of Systems" by Sergio Rinaldi, Published by Clup - Milan or in the text "Linear Optimal Control Systems" by Huibert Kwakernaak, Raphael Sivan" Published by John Wiley & Sons.

- The transfer function of the block 66 is of the type:

$$\begin{bmatrix} B(t) \\ 0 \end{bmatrix}$$

where B(t) represents the input matrix.

The transfer function of the measurement block 56 is of the type:

$$\begin{bmatrix} C(t) & 0 \end{bmatrix}$$

where C(t) represents the transfer function which allows the output variables to be selected from among all the estimated state variables in the estimator; and

- the transfer function of the block 62 is Kem(t) which represents a gain matrix:

$$Kem(t) = \begin{bmatrix} Kex(t) \\ Ke\eta(t) \end{bmatrix}$$

The estimator 46 determines $\hat{\eta}(t)$ in such a way as to reduce to zero the error between estimation and measurement of the observed state variables

$$Y(t) - \hat{Y}(t) \ .$$

In fact, the estimation error

$$e(t) = Y(t) - \hat{Y}(t)$$

multiplied by the gain Kem(t) is integrated by the integrator block 52 and contributes the to the determination of the estimation. The inputs from the integrator block 52, which represent the velocities of the state variables, will be nil when the estimation error is zero for constant command signals u(t).

The additional state variables present in the vector Z(t) at the output from the integrator block 52 can be selected by means of a selector block 70 having an input 70a communicating with the output 52b and an output 70b at which the additional state variables representative of the imaginary commands $\eta(t)$ are present.

6

A transfer function of the selector block 70 is conveniently of the type:

$$\begin{bmatrix} 0 & Id \end{bmatrix}$$

where Id represents the identity matrix.

The values of the additional state variables $\eta(t)$ coming out from the block 70 can now be displayed and therefore utilised by the operator of the physical system 40 for a possible manual correction of the system 40, as constant components (offset) to apply to command signals to compensate the operating errors. The compensation may also be effected in an entirely automatic manner by determining the commands u(t) as a function of the errors of the state variables and the estimated disturbances $\eta(t)$.

In particular, the regulator 44 receiving the references R at its input generates commands u(t) at its output as:

$$u(t) = Krefer \cdot R(t) - Kr(t) \cdot \hat{X}(t) - \hat{\eta}(t)$$

where: Krefer(t) represents the gain of the reference variables; Kr(t) represents a set of gains of the state variables; $\hat{X}(t)$ represents the estimated state variables and $\hat{\eta}(t)$ represents the imaginary commands.

This regulator 44, together with the estimator 46 described, is able to cancel operating errors on the variables which it is desired to regulate thanks to the contribution of the estimated imaginary commands $\hat{\eta}(t)$. The invention therefore comprises: the assimilation of the pertabations which act on the system into imaginary commands, the estimation of the imaginary command $\hat{\eta}(t)$ by means of the above described estimator and the use of the estimated imaginary commands in the law of control.

## Claims

1. An autopilot device of the type comprising:

   - regulator means (44) receiving a plurality of reference signals (R) at its input and generating at its output control signals (u(t)) for a physical system (40) the dynamic behaviour of which can be described by a plurality of state variables (X(t));
   - measurement means (42) cooperating with the said physical system (40) and operable to select from the said state variables (X(t)) a subset of measured output variables (Y(t));
   - estimator means (46) operable to model the said physical system (40) receiving the said control signals (u(t)) at its input and generating at its output a plurality of estimated output variables ($\hat{Y}(t)$);
   - comparator means (50) receiving measured output variables (Y(t)) together with the said estimated output variables ($\hat{Y}(t)$) at its input and generating at its output an error signal (e(t)) utilised by the estimator means (46); the said estimator means (46) further supplying a feedback signal to the said regulator means (44) utilised, together with the said reference signals (R), to calculate the said control signals (u(t)),
   characterised in that an extended dynamic system (Z(t) is provided in the said estimator means (46), which has as state variables a plurality of estimated state variables ($\hat{X}(t)$) of the physical system (40) together with a plurality of additional state variables which model respective imaginary commands ($\hat{\eta}(t)$) of unknown value which have the same effect on the physical system (40) as the said control signals (u(t)) and which introduce the operating errors into the dynamic behaviour of the physical system (40).

2. A device according to Claim 1, characterised in that the said estimator means are described by the system of differential equations:

EP 0 872 785 A1

$$\frac{dZ(t)}{dt} = \begin{bmatrix} A(t) & B(t) \\ 0 & 0 \end{bmatrix} \cdot Z(t) + \begin{bmatrix} B(t) \\ 0 \end{bmatrix} \cdot u(t) + Kem \cdot (Y(t) - \hat{Y}(t))$$

$$\hat{Y}(t) = \begin{bmatrix} C(t) & 0 \end{bmatrix} \cdot Z(t)$$

where:

Y(t) is a vector which represents the said measured output variables;
$\hat{Y}(t)$ is a vector which represents the said estimated output variables;
Z(t) is a vector comprising the said estimated state variables ($\hat{X}(t)$) together with the said additional state variables ($\hat{\eta}(t)$);
A(t) is the free evolution matrix of the modelled system;
B(t) represents the input matrix of the modelled system;
C(t) represents a transfer function which allows the said estimated output variables ($\hat{Y}(t)$) to be selected from among the estimated state variables in the said estimator means; and
Kem represents a gain matrix.

3. A device according to Claim 1 or Claim 2, characterised in that the said estimator means (46) comprise:

- integration means (52) having an input (52a) communicating with a summing node (54) and an output (52b) communicating with the input of selection means (56) generating the said estimated output variables ($\hat{Y}(t)$) at its output;
- first processor means (60) having an input (60a) connected to the output (52b) of the said integration means (52) and an output (60b) communicating with a summing input of the said node (54);
- second processor means (62) having an input (62a) receiving the said error signal (e(t)) and an output (62b) communicating with a summing input of the said node (54); and
  third processor means (66) receiving the said control signal (u(t)) at its input and having an output (30b) communicating with a summing input of the said node (54).

4. A device according to Claim 3, characterised in that the transfer function of the first processor (60) is of the type:

$$\begin{bmatrix} A(t) & B(t) \\ 0 & 0 \end{bmatrix}$$

where A(t) is the free evolution matrix of the modelled system and B(t) is the input matrix of the modelled system;

- the transfer function of the said second processor means (62) includes gain elements (Kem); and
- the transfer function of the said third processor means (66) is of the type:

$$\begin{bmatrix} B(t) \\ 0 \end{bmatrix}$$

where B(t) is the input matrix of the modelled system.

5. A device according to any preceding claim, characterised in that the said physical system comprises a vehicle which moves in a fluid, particularly a submarine.

8

**6.** A device according to any preceding claim, characterised in that the said regulator means (44) generate the said output control signals (u(t)) as:

$$u(t) = Krefer \cdot R(t) - Kr(t) \cdot \hat{X}(t) - \hat{\eta}(t)$$

where:

u(t) are the said control signals;
R(t) are the said reference signals;
$\hat{\eta}(t)$ represents the said imaginary commands;
$\hat{X}(t)$ are the said estimated state variables;
Krefert(t) represents a gain of the reference variables; and
Kr(t) represents a set of gains of the state variables.

**7.** A method for cancelling operating errors in the dynamic behaviour of a system having variable parameters comprising the steps of:

- feeding a plurality of input reference signals (R) to regulator means (44) to generate control signals (u(t)) at its output;
- feeding the said control signals (u(t)) to a physical system (40) the dynamic behaviour of which can be described by a plurality of state variables (X(t));
- selecting (42) from the said state variables (X(t)) a subset of measured output variables (Y(t));
- modelling the said physical system (40) by means of a model receiving the said control signals (u(t)) at its input and generating a plurality of estimated output variables ($\hat{Y}(t)$);
- comparing (50) the said measured output variables (Y(t)) with the said estimated output variables ($\hat{Y}(t)$) to generate an error signal (e(t)) utilised by the said model (46); and
- supplying a feedback signal to the said regulator means (44) together with the said reference signals (R) for calculating the said control signals (u(t)),
     characterised in that it includes the steps of providing in the said model an extended dynamic system (Z(t)) which has as state variables a plurality of estimated state variables ($\hat{X}(t)$) of the physical system (40) together with a plurality of additional state variables which model respective imaginary commands ($\hat{\eta}(t)$) of unknown value which have the same effect on the physical system (40) as the said control signals (u(t)) and which introduce the said operating errors into the dynamic behaviour of the physical system (20) itself.

**8.** A method according to Claim 7, characterised in that the said model is described by a system of differential equations of the type:

$$\frac{dZ(t)}{dt} = \begin{bmatrix} A(t) & B(t) \\ 0 & 0 \end{bmatrix} \cdot Z(t) + \begin{bmatrix} B(t) \\ 0 \end{bmatrix} \cdot u(t) + Kem \cdot (Y(t) - \hat{Y}(t))$$

$$\hat{Y}(t) = \begin{bmatrix} C(t) & 0 \end{bmatrix} \cdot Z(t)$$

where:

Y(t) is a vector which represents the said measured output variables;
$\hat{Y}(t)$ is a vector which represents the said estimated output variables;
Z(t) is a vector comprising the said estimated state variables ($\hat{X}(t)$) together with the said additional state variables ($\hat{\eta}(t)$);
A(t) is the free evolution matrix of the modelled system;
B(t) represents the input matrix of the modelled system;
C(t) represents a transfer function which allows the said estimated state variables ($\hat{Y}(t)$) to be selected from among the estimated state variables in the said estimator means; and

Kem represents a gain matrix.

9. A method according to Claim 7 or Claim 8, characterised in that the said step of supplying at the input a plurality of reference signals (R) to regulator means (44) to generate output control signals (u(t)) comprises the step of generating at the output the said control signals (u(t)) according to the expression:

$$u(t) = Krefer \cdot R(t) - Kr(t) \cdot \hat{X}(t) - \hat{\eta}(t)$$

where:

u(t) are the said control signals;
R(t) are the said reference signals;
$\hat{\eta}(t)$ represents the said imaginary commands;
$\hat{X}(t)$ are the said estimated state variables;
Krefert(t) represents a gain of the reference variables; and
Kr(t) represents a set of gains of the state variables.

Fig.1

Fig.2

**European Patent Office**

## EUROPEAN SEARCH REPORT

Application Number

EP 98 10 6617

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | A.OLIVA: "AN ALTITUDE HOLD AUTOPILOT DESIGN TO WORK WITH AN OBSEREVER BASED STABILITY AUGMENTATION LAW" PROCEEDINGS OF THE IEEE INTERNATIONAL CONFERENCE ON CONTROL AND APPLICATIONS, vol. 1, 24 August 1994, UK, pages 353-358, XP002070556 * the whole document * | 1,7 | G05B13/04 G05D1/08 |
| A | G.CHEN ET AL: "DEPTH CONTROL OF A SUBMERSIBLE VEHICLE UNDER A SEAWAY USING A NOIDE ESTIMATOR" SIXTH INTERNATIONAL CONFERENCE ON ELECTRONIC ENGINEERING IN OCEANOGRAPHY, 19 July 1994, UK, pages 30-34, XP002070557 * the whole document * | 1,7 | |
| A | P.BENDOTTI ET AL: "ADVANCED CONTROL FOR THE DESIGN OF STT MISSILE AUTOPILOTS" FIRST IEEE CONFERENCE ON CONTROL APPLICATIONS, vol. 2, 13 September 1992, USA, pages 613-618, XP002070558 * the whole document * | 1,7 | TECHNICAL FIELDS SEARCHED (Int.Cl.6) G05B G05D |

The present search report has been drawn up for all claims

| Place of search | Date of completion of the search | Examiner |
|---|---|---|
| THE HAGUE | 6 July 1998 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document